# EUROPÄISCHE PATENTSCHRIFT

(11) **EP 2 063 139 B1**
(45) Veröffentlichungstag und Bekanntmachung des Hinweises auf die Patenterteilung: **27.01.2010**
(21) Anmeldenummer: 07021115.6
(22) Anmeldetag: 29.10.2007
(51) Int. Cl.: F16C 17/10, F04D 29/047

(54) **Pumpenaggregat**
Pump power unit
Groupe motopompe

(43) Veröffentlichungstag der Anmeldung: 27.05.2009
(73) Patentinhaber: Grundfos Management A/S, 8850 Bjerringbro (DK)
(72) Erfinder: Grann, Helge, 8850 Bjerringbro (DK); Lisbjerg Pedersen, Alfred, 8850 Bjerringbro (DK)
(74) Vertreter: Hemmer, Arnd

(56) Entgegenhaltungen:
- EP-A- 0 272 442
- EP-A- 0 431 332
- EP-A- 0 771 957
- WO-A-98/05890
- DE-U1- 20 007 841
- JP-A- 2007 270 931

## Beschreibung

Die Erfindung betrifft ein Pumpenaggregat und insbesondere die Lageranordnung in einem solchen Pumpenaggregat.

Pumpenaggregate weisen üblicherweise eine Antriebseinrichtung, beispielsweise einen Elektromotor, eine Rotorwelle und ein an dieser angeordnetes Laufrad auf. Die Rotorwelle muss dabei in axialer und radialer Richtung gelagert werden. In axialer Richtung müssen insbesondere die im Betrieb der Pumpe auf das Laufrad wirkenden Druckkräfte aufgenommen werden. Bei Pumpen mit Spaltrohrmotoren bzw. Magnetkupplungen mit Spaltrohren in der Antriebseinheit wird dazu üblicherweise ein Lager am axialen Ende der Rotorwelle in dem Spaltrohr angeordnet. Problematisch bei dieser Lagerung ist, dass das Lager häufig nicht ausreichend gekühlt oder geschmiert werden kann.

Ferner ist es bei mehrstufigen Pumpen problematisch, dass sich die Tolleranzen in jeder Pumpenstufe addieren, sodass es bei der Montage erforderlich ist, die Pumpräder relativ zu der Rotorwelle zu positionieren oder in der Kupplung zwischen Antriebsmotor und Rotorwelle einen axialen Ausgleich vorzusehen.

EP 0 771 957 A1, die als nächstliegender Stand der Technik angesehen wird, offenbart eine Gleitlagerung für eine Rotorwelle eines Pumpenaggregats. Die Rotorwelle trägt den Rotor des Elektromotors und ist beidseitig des Rotors gelagert, wobei eine Lagerung an dem dem Pumpenlaufrad zugewandten Ende angeordnet ist. Dort ist die Welle in axialer und radialer Richtung gelagert. Zusätzlich ist an dem, dem Laufrad abgewandten Ende der Rotorwelle ein zusätzliches Lager vorgesehen. Das heißt, hier sind an zwei Positionen Lager zur Lagerung der Rotorwelle einzubauen, wodurch sich der Montageaufwand vergrößert.

JP 2007-270931 zeigt eine kombinierte Axial- und Radiallagerung. DE 200 07 841 U1 offenbart eine Gleitdichtung oder ein Gleitlager, bei welchem Radiallager und Axiallager einstückig in ein Bauteil integriert sind.

Es ist Aufgabe der Erfindung, ein Pumpenaggregat bereitzustellen, welches eine verbesserte und vereinfachte Lagerung aufweist, welche eine minimierte Anzahl von Einzelteilen aufweist und leichter zu montieren ist und darüber hinaus eine verbesserte Schmierung bzw. Kühlung ermöglicht.

Diese Aufgabe wird durch ein Pumpenaggregat mit den im Anspruch 1 angegebenen Merkmalen gelöst. Bevorzugte Ausführungsformen ergeben sich aus den Unteransprüchen der nachfolgenden Beschreibung sowie den beigefügten Figuren.

Das erfindungsgemäße Pumpenaggregat weist in bekannter Weise eine drehbare Rotorwelle auf. Diese Rotorwelle ist zum einen mit einer Antriebseinrichtung, beispielsweise einem Elektromotor oder Magnetantrieb, und zum anderen mit mindestens einem Laufrad verbunden. Die Rotorwelle kann einstückig mit der Rotorwelle eines Elektromotors ausgebildet sein oder mit einer Kupplung beispielsweise einer Magnetkupplung verbunden sein, welche das Drehmoment von einem Antriebsmotor auf die Rotorwelle überträgt.

Die Erfindung betrifft eine neuartige Lageranordnung für die Rotorwelle. Erfindungsgemäß sind zumindest ein Axiallager und ein Radiallager für die Rotorwelle vorgesehen. Diese sind dabei erfindungsgemäß in einer Lagerbaugruppe integriert. Dies bewirkt, dass die axiale und die radiale Lagerung an einer Stelle an der Rotorwelle erfolgen kann. So werden die Lager an einer Stelle konzentriert, was die Schmierung und Kühlung vereinfacht.

Die Lagerbaugruppe weist einen Lagerring auf, dessen innenumfangsfläche oder dessen Außenumfangsfläche eine Rodialldgerfläche bildet und dessen axialseitigen Stirnflächen zwei in entgegengesetzte Richtungen wirkende Axialfagerflächen bilden. Der Lagerring bildet somit ein zentrales Lagerbauteil, welches gleichzeitig die Funktion einer Radiallagerung und die Funktion einer Axiallagerung übernimmt. Dabei übernimmt es die Funktion der Axiallagerung in beiden Axialrichtungen. Im Betrieb der Pumpe wirkt jedoch in axialer Richtung auf die Rotorweile üblicherweise nur eine Axialkraft in einer definierten Richtung, welche von dem Axiallager aufgenommen werden muss. In der entgegengesetzten Richtung wirken lediglich beim Anlaufen der Pumpe Kräfte, oder aber im Fehlerfall. Insofern kann ein hierzu erforderliches Lager schwächer dimensioniert werden, da es lediglich ein Anlauf- bzw. Notlager bilden muss. Durch die Verwendung des Lagerringes als zentrales Lagerbauteil, wird die Zahl der erforderlichen Einzelteile in der Lagerbaugruppe minimiert. So dient die zylindrische innenumfangsfläche oder die zylindrische Außenumfangsfläche des Lagerringes der Radiallagerung. Die zu diesen zylindrischen Innen- und Außenumfangsflächen normalen Stirnflächen dienen als Axiallagerflächen. Die Lagerflächen, d. h. die Axiallagerflächen sowie die Radiallagerflächen, bilden vorzugsweise Teile von Gleitlagern, d.h. diese Flächen kommen gleitend mit entsprechend gegenüberliegenden Lagerelementen zur Kraftübertragung in Eingriff. Dabei erfolgt eine Schmierung vorzugsweise durch das von der Pumpe zu fördernde Fluid. Der Lagerring wird vorzugsweise aus einem harten Material gefertigt oder weist zumindest an den als Lagerflächen dienenden Flächen entsprechend harte Oberflächenbeschichtungen auf.

Die Lagerbaugruppe ist in axialer Richtung von den Axialenden der Rotorwelle beabstandet angeordnet. Die Lagerung der Rotorwelle sowohl in axialer als auch radialer Richtung erfolgt somit im Zentralbereich und nicht an den Axialenden. So kann auf eine Lagerung am Axialende der Rotorwelle, insbesondere an dem in einem Spaltrohr gelegenen Axialende, verzichtet werden. Somit entfallen die schlecht zu kühlenden und zu schmierenden Lager am Boden des Spaltrohrtopfes einer Spaltrohrpumpe. Die zentralere Anordnung der Lager im Pumpenaggregat ermöglicht eine bessere Kühlung und Schmierung, da die Lager näher zum Laufrad der Pumpe und damit zu der Fluidströmung angeordnet werden können. So ist es leichter, einen Teil der Fluidströmung durch das Lager zu dessen Kühlung und Schmierung zu leiten.

Der Lagerring ist vorzugsweise in einem Lagergehäuse angeordnet. Dieses Lagergehäuse kann dann in ein Pumpengehäuse integriert werden und vereinfacht so die Montage, da das gesamte Lagergehäuse in einem Montageschritt montiert werden kann, wodurch gleichzeitig Axiallager und Radiallager montiert werden. Ferner kann das Lagergehäuse so ausgebildet bzw. angeordnet sein, dass eine Justage bzw. Ausrichtung der Position des gesamten Lagergehäuses in dem Pumpenaggregat bzw. Pumpengehäuse möglich ist, beispielsweise um Toleranzen in den Pumpenstufen auszugleichen und die Rotorwelle, welche in den Lagern in dem Lagergehäuse gelagert ist, an definierter Stelle in dem Pumpenaggregat zu positionieren. So kann die Rotorwelle stets richtig im Bezug auf die Antriebseinrichtung, beispielsweise eine Magnetkupplung positioniert werden.

Besonders bevorzugt ist die Lagerbaugruppe in axialer Richtung gesehen, d. h. in Richtung der Rotorwelle gesehen, zwischen zumindest einem Laufrad und einer Antriebseinrichtung des Pumpenaggregates angeordnet. Bei der Antriebseinrichtung handelt es sich dabei z. B. um einen Elektromotor oder eine Magnetkupplung, welche die Verbindung zu dem eigentlichen Antrieb herstellt. So liegt die Lagerbaugruppe nahe zu dem Laufrad der Pumpe, sodass die Fluidströmung leichter zu der Lagerbaugruppe zu deren Kühlung und Schmierung geleitet werden kann. Auch können die Kräfte, welche auf das Laufrad wirken so nahe ihres Angriffspunktes von der Lagerbaugruppe aufgenommen werden, sodass die auf die Rotorwelle wirkende Biegemomente reduziert werden können. Ferner kann das Axialende, welches der Antriebseinrichtung zugewandt ist, frei von Lagerungen gehalten werden, sodass hier die Antriebseinrichtung in ihrer Ausgestaltung optimiert werden kann. Es ist nicht mehr erforderlich in der Antriebseinrichtung, beispielsweise im Inneren eines Spaltrohrmotors oder einer Magnetkupplung, eine zusätzliche Lagerung für die Rotorwelle vorzusehen. Dadurch wird es im Falle eines Spaltrohrmotors auch möglich, das Spaltrohr weniger steif auszubilden, da das Spaltrohr keine Lagerkräfte übertragen muss.

Beispielsweise kann der Lagerring aus Hartmetall oder Keramik beispielsweise Siliziumcarbid (SiC) gefertigt sein. Der Lagening kann mit der Rotorwelle verbunden sein und gemeinsam mit dieser rotieren. Dann bildet die AuBenumfangsfläche des Lagerrings die Radiallagerfläche. Gemäß einer bevorzugten Ausführungsform ist es jedoch so, dass der Lagerring fest angeordnet ist und der innenumfang des Lagerringes die Radiallagerfläche bildet. Das heißt in diesem Fall wird der Lagerring in der Lagerbaugruppe, d. h. beispielsweise dem Lagergehäuse und damit dem Pumpenaggregat ortsfest fixiert. Die Rotorwelle dreht sich in der zentralen Ausnehmung des Lagerringes, wobei die innenumfangsfläche des Lagerringes die Radiallagerfläche bildet, an welcher die Rotorwelle vorzugsweise gleitend geführt ist.

Dazu ist bevorzugt an der Rotorwelle drehfest ein Radiallagerelement angeordnet, welches gleitend mit Radiallagerfläche des Lagerrings in Kontakt ist. Das Radiallagerelement bildet die zu der Innenumfangsfläche des Lagerringes korrespondierende Lagerfläche welche mit der innenumfangsfläche des Lagerringes ein Gleitlager bildet. Das Radial lagerelement kann dabei einstückig mit der Rotorwelle ausgebildet sein. Das heißt, die erforderlichen Lagerflächen sind einstückig in der Rotorwelle ausgebildet. Bevorzugt ist jedoch ein Radiallagerelement aus einem geeigneten Lagermaterial mit der Rotorwelle verbunden. Besonders bevorzugt ist das Radialelement ein Lagerring, welcher auf die Rotorwelle aufgeschoben ist und mit dieser kraft- und/oder formschlüssig in Eingriff ist. Die Außenumfangsfläche dieses Lagerrings aus einen geeignetem Lagermaterial bildet die Lagerfläche welche an der Innenumfangsfläche des Lagerringes gleitend zur Anlage kommt. Anstelle eines durchgehenden Lagerringes könnten auch einzelne Lagerelemente vorzugsweise gleichmäßig um den Umfang der Lagerwelle verteilt angeordnet sein, beispielsweise indem sie in entsprechende Ausnehmungen an der Lagerwelle eingesetzt sind. Das Radiallagerelement, welches drehfest an der Rotorwelle angeordnet ist, ist aus einem geeignetem Lagermaterial, beispielsweise Hartmetall oder Keramik, z. B. Siliziumcarbid gefertigt.

Weiter bevorzugt ist an der Rotorwelle ein Drucklagerelement angeordnet, welches mit einer der Axiallagerflächen des Lagerrings in gleitendem Kontakt ist. Dieses Drucklagerelement überträgt die von dem Laufrad beim Betrieb der Pumpe erzeugten Druckkräfte von der Rotorwelle auf den Lagerring. Das Drucklagerelement bildet dabei vorzugsweise mit einer der Axiallagerflächen des Lagerringes ein Gleitlager. Auch das Drucklogerelement kann einstückig mit der Rotorwelle ausgebildet sein oder ein Bauteil sein, welches mit der Rotorwelle so verbunden ist, dass Axialkräfte von der Rotorwelle auf das Drucklagerelement übertragen werden können. Das Drucklagerelement weist bevorzugt Lagerflächen auf, welche gleitend mit den Axiallagerflächen des Lagerringes in Kontakt sind. Die Lagerflächen des Drucklagerelementes sind aus einem geeignetem Material, beispielsweise Hartmetall oder Keramik, z. B. Siliziumcarbid gefertigt. Hierzu können, Lagerbauteile aus diesem Material in entsprechende Aufnahmen eingesetzt sein. Diese Lagermaterialien können jedoch auch in Form von Beschichtungen auf geeignete Trägerelemente aufgebracht sein.

Besonders bevorzugt weist das Drucklagerelement einen ringförmigen Lagerträger auf, welcher mit der Rotorwelle verbunden ist und in welchem über den Umfang verteilt mehrere Lagerklötze angeordnet sind, welche mit der Axiallagerfläche des Lagerringes in Kontakt sind. Diese Lagerklötze sind dabei aus dem zuvor beschriebenen geeigneten Lagermaterial gefertigt und in entsprechenden Aufnahmen in dem Lagerträger angeordnet, sodass sie gemeinsam mit dem Lagerträger mit der Rotorwelle rotieren. Der Lagerträger ist kraft- und/oder formschlüssig mit der Rotorwelle verbunden, sodass er mit der Rotorwelle rotiert und Axialkräfte von der Rotorwelle auf die Axiallagerfläche des Lagerringes übertragen kann.

Gemäß einer weiteren bevorzugten Ausführungsform ist an der Rotorwelle ein Notlagerelement angeordnet, welches eine Lagerfläche aufweist, welche einer der Axiallagerfächen des Lagerringes zugewandt ist. Diese Lagerfläche kommt mit der gegenüberliegenden Axiallagerfläche des Lagerringes in gleitenden Kontakt und bildet so ein Gleiflager. Dieses so gebildete Notlager wirkt in axialer Richtung und kann Axialkräfte aufnehmen, welche beim Anlaufen des Pumpenaggregates in einer Lastrichtung wirken, welche der im Betrieb üblichen Richtung der Axiallast entgegengesetzt ist, und In umgekehrter Richtung entstehende Axialkräfte aufnehmen kann. Die im normalen Betrieb entstehenden Axialkräfte werden von dem oben beschriebenen Drucklager übertragen, welches entsprechend vorzugsweise stärker dimensioniert ist als das Notlagerelement. Das Notlagerelement, kann ebenfalls aus einem Hartmetall oder aus Keramik gefertigt sein, wie oben beschrieben. Jedoch können hier auch andere Materialien, wie beispielsweise eine Kombination von Graphit und Polytetrafluorethylen, (PTFE) eingesetzt werden. Ein solches Material weist gute Trockenlaufeigenschaften auf, was insbesondere beim Anlauf der Pumpe wichtig ist, da in diesem Zustand noch keine ausreichende Schmierung der Lagerflächen gegeben ist. Das beschriebene Notlager kann gleichzeitig auch als Radial-Notlager ausgebildet sein. Hierzu kann das Notlagerelement, welches mit der Rotorwelle verbunden ist, so ausgebildet sein, dass es an einer zylindrischen Lagerfläche, beispielsweise in dem Lagergehäuse gleitend zur Anlage kommt. So kann eine Notlagerung bereitgestellt werden, falls die eigentliche Radiallagerung, welche oben beschrieben wurde, beschädigt wird. Das Notlagerelement ist mit der Rotorwelle vorzugsweise kraft- und/oder formschlüssig verbunden, sodass es Axialkräfte in zumindest einer Richtung auf die gegenüberliegende Axialfläche des Lagerringes übertragen und mit der Rotorwelle mitdrehen kann.

Bevorzugt sind eine Lagerfläche des Drucklagerelementes und die Lagerfläche des Notlagerelementes einander zu oder einander abgewondt. In dem Fall, dass ein Lagerring als feststehendes Bauteil vorgesehen ist, sind die Lagerfläche des Drucklagerelementes und die Lagerfläche des Notlagerelementes einander zugewandt, sodass sie an den entgegengesetzten Stirnseiten des Lagerringes zur Anlage kommen. Wenn der Lagerring mit der Rotorwelle rotiert, können die Lagerfläche des Drucklagerelementes und die Lagerfläche des Notlagerelementes von den entgegengesetzt gerichteten, d. h. einander abgewandten Stirnseiten des Lagerringes gebildet werden, welche mit gegenüberliegenden Axiallagerflächen im Lagergehäuse zur Anlage Kommen, Bevorzugt ist jedoch die Ausführungsform, bei welcher der Lagerring fest angeordnet ist. Bei dieser Ausgestaltung dienen dann die beiden axialen Stirnseiten des Lagerringes sowie die innenumfangsfläche als Lagerflächen, sodass die Axiallager für beide Axialrichtungen sowie das Radiallager an einem Bauteil vereinigt werden, wodurch sich Kühlung, Schmierung und Montage des Lagers vereinfachen.

Das Notlagerelement ist bevorzugt ringförmig ausgebildet und der innenumfang oder der Außenumfang dieses Notlagerelementes bildet ein Radiallager für die Rotorwelle. So kann das Notlagerelement die Rotorwelle im Falle einer Beschädigung des oben beschriebenen Radiallagers in radialer Richtung lagern. Dabei ist das Notlager vorzugsweise so konstruiert, dass im Normalbetrieb die in radialer Richtung entstehenden Kräfte von dem oben beschriebenen Radiallager und nicht von dem Notlager aufgenommen werden.

Für das Notlagerelement wird vorzugsweise ein Werkstoff mit geringer Reibung, beispielsweise PTFE eingesetzt. Insbesondere wird vorzugsweise ein Werkstoff mit guten Trockenlaufeigenschaften gewählt, um im Notfall eine Lagerung ohne ausreichende Schmierung sicherstellen zu können.

Weiter bevorzugt hat das Notlagerelement einen größeren Wärmeausdehnungskoeffizienten als das oben beschriebene Radiallager welches von dem Lagerring gebildet wird. Dies ermöglicht eine Konstruktion bet welcher das Notlager im Normalbetrieb im Wesentlichen keine Kräfte auf eine korrespondierende Lagerfläche überträgt. Erst bei Erwärmung dehnt sich das Notlager soweit aus, dass es derart in gleitenden Kontakt mit einer korrespondierenden Lagerfläche kommt, dass es die gewünschte Lagerfunktion übernehmen kann. So kann bei Überhitzung der Lagerbaugruppe, wie Sie insbesondere beim Trockenlauf auftreten kann eine Beschädigung des Radiallagers, welches von dem Lagerring gebildet wird, vermieden werden. In diesem Fall übernimmt aufgrund der thermischen Ausdehnung das Notlagerelement die Radiallagerung.

Der Lagerring ist vorzugsweise in einem Lagergehäuse mittels eines Klemmringes fixiert. Der Klemmring wird dabei vorzugsweise von einem Federring gebildet, welcher eine kraftschlüssige Fixierung des Lageringes in dem Lagergehäuse bewirkt. Dabei lässt der Klemm- bzw. Federring aufgrund seiner Plastizität eine gewisse Relativbewegung zwischen Lagerring und Lagergehäuse zu. Insbesondere sorgt er dafür, dass Lagerring und Lagergehäuse auch dann fest in Engriff gehalten werden, wenn beide sich aufgrund Erwärmung oder Abkühlung in ihrer Größe verändern. Dies ist insbesondere deshalb von Vorteil, da Lagerring und Lagergehäuse unterschiedliche Ausdehnungskoeffizienten aufweisen können. So ist das Lagergehäuse beispielsweise aus Stahl und der Lagerring beispielsweise aus SIC gefertigt, welche unterschiedliche Wärmeausdehnungskoeffizienten aufweisen. Vorzugsweise ist der Klemmring so angeordnet, dass er den Lagerring an seinem Außenumfang umgibt und zwischen dem Außenumfang des Lagerringes und einer zylindrischen innenwandung eines den Lagerring umgebenden Lagergehäuses eingeklemmt ist.

Gemäß einer weiteren bevorzugten Ausführungsform ist das Lagergehäuse in dem Pumpenaggregat in axialer Richtung positionierbar bzw. justierbar. Die axiale Richtung ist dabei die Richtung der Drehachse der Rotorwelle. Die Positionierung kann beispielsweise. über Distanzelemente, welche zwischen dem Lagergehäuse und den Auflageflächen für das Lagergehäuse in dem Pumpengehäuse eingelegt werden, erfolgen. Alternativ können beispielsweise auch Stellschrauben vorgesehen sein. Durch die axiale Positionierung des Lagergehäuses kann die gesamte Lageranordnung, d. h. Axial und Radiallager gemeinsam mit der Rotorwelle in axialer Richtung positioniert werden sodass Toleranzen ausgeglichen werden können, um die Rotorwelle definiert bezüglich einer Antriebseinrichtung, beispielsweise einer Magnetkupplung, im Inneren des Pumpengehäuses zu positionieren. Anschließend wird die Positionierung dann beibehalten. Vorzugsweise sind mit der Rotorwelle sowohl der innere Teil einer Magnetkupplung oder der Rotor eines Elektromotors und die Laufräder der Pumpe fest verbunden. Durch Positionierung des Lagergehäuses können somit diese Elemente gemeinsam mit der Rotorwelle in axialer Richtung positioniert werden.

Weiter bevorzugt sind in dem Lagergehäuse axiale Durchgänge für das von dem Pumpenaggregat zu fördernde Fluid ausgebildet. Dies ist insbesondere dann vorteilhaft, wenn die Lagerbaugruppe in axialer Richtung zwischen dem Laufrad der Pumpe und der Antriebseinrichtung angeordnet wird. So wird ermöglicht, dass Fluid aus dem Bereich des Laufrades durch das Lagergehäuse hindurchströmen kann, um hier zum einen die Lagerflächen in dem Lagergehäuse zu schmieren und zu kühlen und zum anderen den Durchtritt von Fluid zu der Antriebseinrichtung zu ermöglichen, um dort auch die Antriebseinnchtung selber zu kühlen.

Um durch die beschriebenen Radial und Axiallager hindurch einen Fluiddurchgang zu ermöglichen, sind vorzugsweise in der Rotorwelle axial verlaufende Kanäle bzw. Nuten ausgebildet, durch welche das Fluid im Inneren des Lagers entlang der Rotorwelle strömen kann.

Nachfolgend wird die Erfindung beispielhaft anhand der beigefügten Figuren beschrieben. In diesen zeigt:

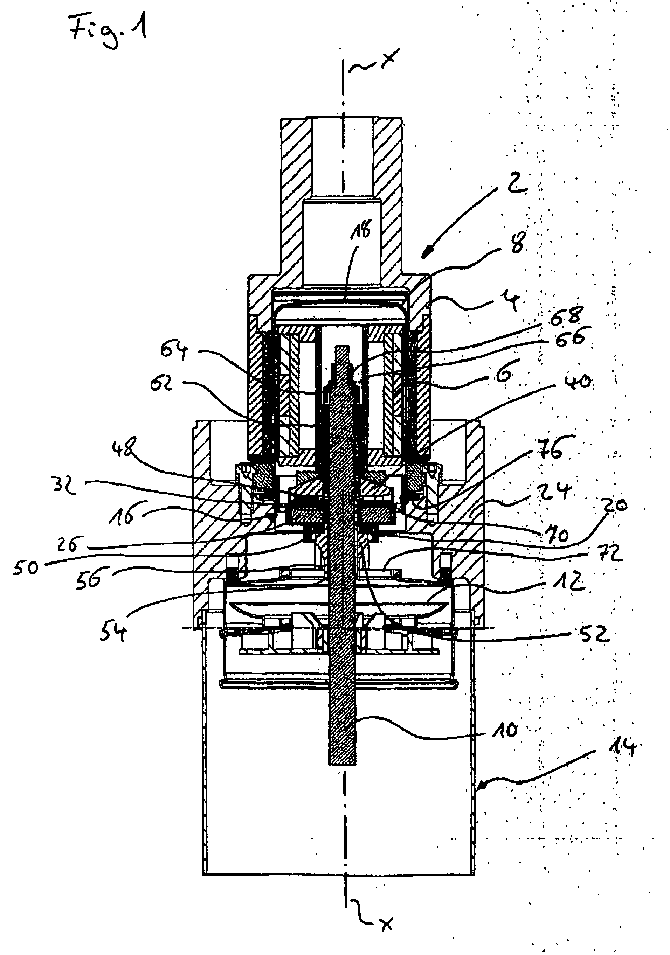

- Fig. 1: eine schematische Schnittansicht eines erfindungsgemäßen Pumpenaggregates,
- Fig. 2: eine Schnittansicht der Lagerbaugruppe des Pumpenaggregates gemäß Fig. 1, und

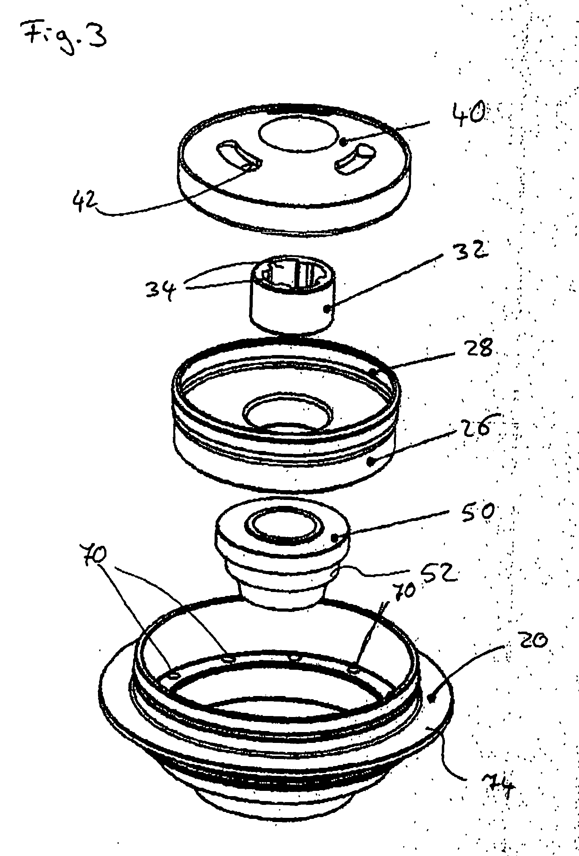

- Fig. 3: eine Explosionsansicht der Lagerbaugruppe gemäß Fig. 2.

Das in den Figuren beispielhaft gezeigte Pumpenaggregat gemäß der Erfindung weist eine Antriebseinrichtung 2 in Form eine Magnetkupplung auf. Die magnetkupplung weist ein Außenteil 4 sowie ein innenteil 6 auf, zwischen denen ein Spaltrohr bzw. Spaltrohrtopf 8 angeordnet ist. Das Außenteil 4 wird in hier nicht mehr gezeigter Weise mit einem Antriebsmotor verbunden, sodass es um die Längsachse X drehend angetrieben werden kann. Die Drehbewegung wird durch Magnete durch das Spaltrohr 8 hindurch auf das innenteil 6 übertragen welches entsprechend um die Längsachse X rotiert, Das Innenteil 6 ist drehfest mit der Rotorwelle 10 verbunden, welche die Laufräder 12 in dem Pumpenteil 14 des Pumpenaggregates antreibt. Im gezeigten Beispiel ist nur ein Laufrad 12 gezeigt, es ist jedoch zu verstehen, dass die Pumpe mehrstufig ausgebildet sein kann, und entsprechend mehrere axial, d. h. in Richtung der Längsachse X hintereinander angeordnete Laufrader 12 an der Rotorwelle 10 befestigt sein können.

Erfindungswesentlich ist, dass die Rotorwelle 10 in einer zentralen Lagerbaugruppe 16 gelagert ist. Die Lagerbaugruppe 16 fasst Radial- und Axiallager zusammen und ist in axialer Richtung, d. h. in Richtung der Längsachse X zwischen der Antriebseinrichturig 2 und dem Laufrad 12 angeordnet. Insbesondere ist bei dieser Anordnung vorteilhaft, dass kein Lager für die Rotorwelle 10 in der Nähe des Bodens 18 des Spaltrohrtopfes 8 vorgesehen werden muss. Die Lager der Lagerbaugruppe 16 sind alle nahe zu dem Pumpenteil 14 gelegen und können so leicht mit dem zu fördernden Fluid zur Kühlung und Schmierung versorgt werden. Darüber hinaus ermöglicht die Zusammenfassung der verschiedenen Lager in einer Lagerbaugruppe eine einfache Montage und Justage der Lager und der Rotorwelle 10 im Inneren des Pumpenaggregates. So wird durch Positionierung der Lagerbaugruppe 16 auch die Rotorwelle 10 in axialer Richtung definiert positioniert, sodass der Innenteil 6 der Antriebseinrichtung in definierter axialer Position zu dem Außenteil 4 für einen optimalen Wirkungsgrad des Antriebs gehalten wird.

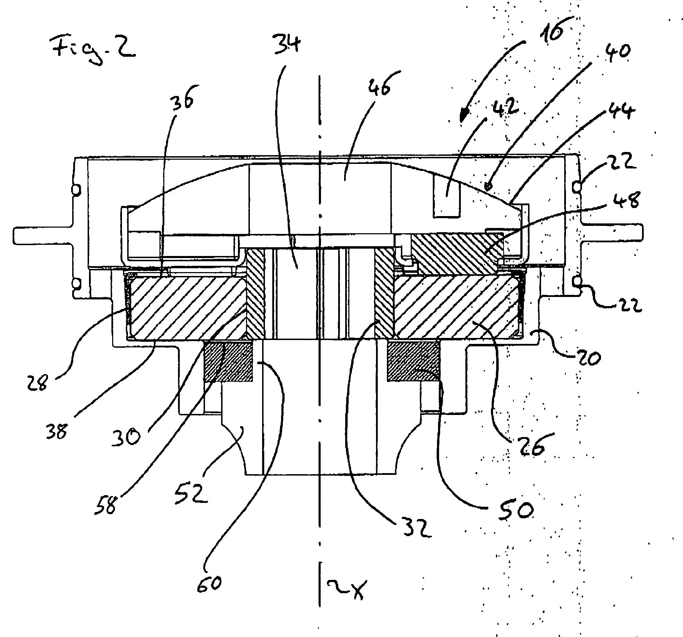

Bezüglich des genauen Aufbaus der Lagerbaugruppe 16 wird insbesondere auf Fig. 2 verwiesen. Die gesamte Lagerbaugruppe 16 ist in einem Lagergehäuse 20 angeordnet. Das Lagergehäuse ist aus einem geeigneten Material, beispielsweise Metall oder Kunststoff, vorzugsweise als Gussteil gefertigt. Das Lagergehäuse ist im Wesentlichen rotationssymmetrisch zur Längsachse X ausgebildet, An seinem Außenumfang weist das Lagergehäuse 20 zwei Nuten 22 mit darin angeordneten O-Ringen auf. Mittels dieser O-Ringe kann das Lagergehäuse flüssigkeitsdicht in das Pumpengehäuse 24 eingesetzt werden, sodass das zu fördernde Fluid nicht am Außenumfang des Lagergehäuses 20 entlang strömen kann.

In dem Lagergehäuse ist ein zentraler Lagering 26 angeordnet. Dieser ist aus Keramik, insbesondere Siliziumcarbid gefertigt und bildet die erforderlichen feststehenden Radial- und Axiallagerflächen. Der Lagerring 26 ist in eine zylindrische Aufnahme in dem Lagergehäuse 20 eingesetzt und wird dort durch einen als Federring ausgebildeten Klemmring 28 fixiert. Der Klemmring 28 liegt zwischen dem Außenumfang des Lagerringes 26 und der zylindrischen Innenwandung des Lagergehäuses 20 an und ist in radialer Richtung bezogen auf die Langsachse X derart federnd ausgebildet, dass er eine Druckkraft radial nach innen auf den Lagerring 28 und radial nach außen auf die Innenwandung des Lagergehäuses 20 ausübt. Auf diese Weise wird der Lagerring 26 kraftschlüssig In dem Lagergehäuse 20 gehalten.

Der Lagerring 26 bildet an seinem Innenumfang eine Radiallagerflache 30. Mit der Radiallagerfläche 30 zusammen wirkt ein Radiallagerelement 32, welches drehfest an der Rotorwelle 10 angebracht ist. Das Radiallagerelement 32 ist ringförmig ausgebildet mit einer kreiszylindrischen Außenfläche, welche gleitend an der Radiallagerfläche 30 zur Anlage kommt. Am Innenumfang weist das Radiallagerelement 32 sich in axialer Richtung erstreckenden Nuten 34 auf, in welche entsprechende sich in axialer Richtung erstreckende Vorsprünge am Aüßenumfang der Rotorwelle 10 eingreifen, sodass sich das Lagerelement 32 gemeinsam mit der Rotorwelle 10 dreht. Auch das Lagerelement 32 ist aus einem geeignetem Lagermaterial, insbesondere einem Hartmetall oder Keramik, beispielsweise Siliziumcarbid gefertigt Die Außenumfangsfläche das Radiallagerelementes 32 bildet mit der Innenumfangsfläche des Lagerrings 26 ein Gleitlager.

Die beiden voneinander abgewandten Stirnflächen 36 und 38 des Lagerringes 26 bilden die feststehenden Axiallagerflächen für die axiale Lagerung der Rotorwelle 10. Dabei ist die Stirnfläche 36 diejenige Axiallagerfläche, welche die Hauptdrucklast im Betrieb des Pumpenaggregates aufnehmen muss. Zur Übertragung dieser Druckkraft von der Rotorwelle auf die Axiallagerfläche 36 ist ein Drucklagerelement 40 vorgesehen, welches drehfest mit der Rotorwelle 10 bzw. dem Innenteil 6 der Antriebseinrichtung 2 verbunden ist. Hierzu greifen Mitnehmerstifte (hier nicht gezeigt), welche mit dem Innenteil 6 der Antriebseinrichtung 2 verbunden sind, in die Löcher 42 eines Lagerträgers 44 des Drucklagerelementes 40 ein. Der Lagerträger 44 weist eine zentrale Ausnehmung 46 auf, durch welche sich die Rotorwelle 10 erstreckt. Im gezeigten Beispiel weist das Drucklagerelement 40 keine durchgehende Axiallagerfläche auf, welche in gleitendem Kontakt mit der Stirnfläche 36 des Lagerringes 26 ist. Vielmehr sind einzelne Lagerklötze 48 gleichmäßig über den Umfang verteilt in dem Lagerträger 44 angeordnet. Diese Lagerklötze 48 bilden keinen durchgehenden Ring sondern einzelne Lagerflächen, welche in Umfangsrichtung voneinander beabstandet sind sodass in radialer Richtung Durchgänge zwischen den Lagerklötzen 48 bestehen. Alternativ ist es jedoch auch denkbar, einen durchgehenden lagerring anzuordnen, in welchem beispielsweise Nuten für den Fluiddurchgang ausgebildet sein können. Die Lagerklötze 48 liegen gleitend an der Stirnfläche 36 des Lagerringes 26 an und bilden mit dieser ein Axial-Gleitlager, welches als Drucklager die beim Betrieb der Pumpe auftretenden Axialkräfte aufnimmt. Die Lagerklötze 48 sind aus einem geeignetem Lagermaterial, beispielsweise Hartmetall oder Keramik, beispielsweise Siliziumcarbid gefertigt.

An der entgegengesetzten Stirnseite des Lagerringes 26 bildet die axiale Stirnfläche 38 eine weitere Axiallagerfläche, welche Teil eines Notlagers ist. Das Notlager weist ein ringförmiges Lagerelement 50 auf, welches in einem Lagerträger 52 gehalten ist. Der Lagerträger 52 ist in axialer Richtung an der Rotorwelle 10 abgestützt. Hierzu stützt sich der Lagerträger 52 an einem Sicherungsring 54, welcher an der Rotorwelle 10 befestigt ist ab, wobei im gezeigten Beispiel zwischen Lagerträger 52 und Sicherungsring 54 noch eine Distanzhülse 56 angeordnet ist. Auf diese Weise können von der Rotorwelle 10 Axialkräfte in einer Richtung entgegengesetzt zu der im Betrieb auftretenden Axialkraft, welche Ober das Drucklagerelement 40 auf den Lagerring 26 übertragen wird, auf den Lagerträger 52 und das Lagerelement 50 übertragen werden. Das ringförmige Lagerelement 50 kommt mit seiner axialen Stirnseite 58 gleitend an der Stirnfläche 38 des Lagerringes 26 zur Anlage und bildet dort ein axiales Gleitlager. Dieses axiale Gleitlager kann kleiner und schwächer dimensioniert sein als das von dem Drucklagerelement 40 und der Stirnfläche 36 des Lagerringes 26 gebildeten Axiallagers da an dem Notlager wesentlich geringere Axialkräfte auftreten. Beim normalen Betrieb der Pumpe treten in dieser Richtung keinerlei Druckkräfte auf, sodass das Lagerelement 50 keine Axialkräfte auf die Stirnfläche 38 übertragen muss. Lediglich beim Anlaufen der Pumpe können. Axialkräfte in dieser Richtung auftreten, diese sind jedoch gering und verschwinden, sobald die Pumpe Fluid fördert. Ferner können im Fehlerfall, Axialkräfte in dieser Richtung auftreten.

Das Lagerelement 50 ist vorzugsweise aus einem Lagermaterial mit guten Trockenlaufeigenschaften, beispielsweise PTFE mit Zusätzen wie Graphit gefertigt, sodass hier ein leichter Lauf auch gewährleistet ist, wenn noch kein Fluid gefördert wird, welches zur Schmierung beiträgt. Ferner kann ein Werkstoff wie PTFE gewählt werden welcher fluid absorbieren kann und so eine Schmierung gewährleisten kann Das La-, gerelement 50 liegt mit seinem Außenumfang ferner gleitend an einer zylindrischen Innenwandung des Lagergehäuses 20 an und bildet so ein Not-Radiallager für den Fall, dass das Radiallagerelement 32 beschädigt sein sollte und die Radialkräfte nicht mehr auf den Lagerring 26 wie gewünscht übertragen können.

Als Werkstoff für das Lagerelement 50 wird vorzugsweise ein Werkstoff mit großem Wärmeausdehnungskoeffizienten, wie PTFE gewählt. Insbesondere kann der Ausdehnungskoeffizient größer sein als derjenige der Materialien, aus denen der Lagerring 26 sowie das Radiallagerelement 32 gefertigt sind. Dadurch wird erreicht, dass sich bei einer Erwärmung, wie sie im Trockenlauf auftreten kann, das Lagerelement 50 ausdehnt und so an der Innenwandung des Lagergehäuses 20 die Radiallagerung der Welle übernimmt. Dadurch wird das Radiallager zwischen dem Lagerring 26 und dem Rodiallagerelement 32 im Trockenlauf entlastet, sodass eine Beschädigung dieses Radiallagers vermieden wird.

Das Lagerelement 50 ist an dem Lagerträger 52 so angeordnet, dass der Lagerträger 52 sich am Innenumfang des ringförmigen Lagerelementes 50 in axialer Richtung über eine größere Länge erstreckt als dos Lagerelement 50 in axialer Richtung. Auf diese Weise bildet der Lagerträger 52 im Inneren des Lagerelementes 50 einen Distanzring 60 weicher mit seiner Stirnseite an dem Radiallagerelement 52 anliegt Dies sorgt dafür, dass im normalen Betrieb, wenn die Lagerklötze 48 an der Axiallagerfläche 36 anliegen, das Lagerelement 50 von der Stirnfläche 38 des Lagerringes 26 beabstandet ist. Lediglich wenn Axialkräfte in umgekehrter Richtung auftreten sollten, wird die Rotorwelle 10 geringfügig in axialer Richtung verschoben, sodass das Lagerelement 50 an der Stirnfläche 38 zur Kraftübertragung zur Anlage kommt. Wenn das Radiallager 32 beschädigt sein sollte, könnte sich der Distanzring 60 nicht mehr an diesem Radiallagerelement 32 abstützen. In diesem Fehlerfall würde dann das Lagerelement 50 mit der Stirnfläche 38 des Lagerringes 26 in gleitenden Kontakt kommen. Dies wird, dadurch möglich, dass das Drucklagerelement 40 in axialer Richtung federnd an der Rotorwelle 10 abgestützt ist. In diesem Falle kämen somit gleichzeitig das Lagerelement 50 und die Lagerklötze 48 an dem Lagerring 26 zur Anlage. In solch einem Fehlerfall würde sich somit die Reibung im Lager, insbesondere auch durch von den Beschädigungen herrührende lose Teile erhöhen. Dies würde zu einem höherem Lastmoment und daher höherem Strom im Antriebsmotor führen, welcher dann von einer Sicherheitsschaltung in der Motorsteuerung detektiert werden könnte um den Motor abzuschalten.

Das Drucklagerelement 40 stützt sich über Distanzhülsen 62 und 64 und einen Federring 66 an einer Mutter 68 ab, weicher auf das axiale. Stirnende der Rotorwelle 10 aufgeschraubt ist.

Zur Schmierung des Lagers sowie zur Kühlung der Antriebseinrichtung 2 sind in dem Lagergehäuse 20 sich in axialer Richtung d. h. parallel zur Längsachse X erstreckende Löcher 70 vorgesehen. Eine Vielzahl von Löchern 70 ist über den Umfang verteilt angeordnet. Die Löcher 70 bilden einen Durchgang von dem Pumpenauslass 72. zum Inneren des Spaltrohrtopfes 8. Auf diese Weise strömt gefördertes Fluid durch die Löcher 70 in das Innere des Spaltrohrtopfes. Dort strömt es zwischen der Außenseite des Innenteiles 6 und der Innenwandung des Spaltrohrtopfes 8 bis zum Boden 18 des Spaltrohrtopfes und sorgt dabei für eine Kühlung der Antriebseinrichtung. Anschließend tritt es in axialer Richtung in das Innere des Innenteils 6 ein und strömt entlang der Rotorwelle 10 durch sich axial erstreckende Nuten im Außenumfang, der Rotorwelle in das Innere des Lagergehäuse 20. Dort kann es zwischen dem Drucklagerelement 40 und der Stirnfläche 36 des Lagerringes 26 radial nach außen strömen. Dies wird insbesondere durch die Freiräume zwischen den Lagerklötzen 48 ermöglicht. Auf diese Weise kann eine ausreichende Schmierung des axialen Gleitlagers zwiscken den Lagerklötzen, 48 und der Stirnfläche 36 erreicht werden. Gleichzeitig kann das Fluid auch an der Innenseite des Lagerringes 26, d. h. zwischen der Außenfläche des Radiallagerelementes 32 und der Radiallagerfläche 30 des Lagerringes 26 entlang strömen, um das Radiallager zu schmieren Von dort aus tritt es dann auch in den Spalt zwischen der Stirnfläche 38 und, dem Lagerelement 50 ein. Das Lagerelement 50 kann darüber hinaus direkt vom Pumpenauslass 72 mit Fluid versorgt werden das Fluid tritt dabei in den Spalt zwischen dem Innenumfang des Lagergehäuses 20 und dem Außenumfang des Lagerträgers 52 ein und wird dort von dem Lagerelement 50, welches vorzugsweise fluidabsorbierend ist, aufgenommen.

Über das Lagergehäuse 20 werden sämtliche Lagerelemente für die radiale und axiale Lagerung in dem Pumpengehäuse 24 fixiert. Dies ermöglicht eine einfache Ausrichtung der Lagerelemente und damit der Rotorwelle 10 im Inneren des Pumpengehäuses 24 in axialer Richtung X. So weist das Lagergehäuse 20 einen sich radial nach außen erstreckenden Vorsprung bzw. Flansch 74 auf, über welchen das, Lagergehäuse 20 in axialer Richtung in dem Pumpengehäuse 24 abgestützt bzw. fixiert wird. Durch die Anordnung von unterschiedlich dicken Distanzelementen bzw. Distanzscheiben 76 zwischen dem Flansch 74 und einer Anlagefläche im Pumpengehäuse 24 kann die axiale Position des Lagergehäuses 20 bezüglich des Pumpengehäuses 24 und damit des Lagerringes 26 und der an diesem gelagerten Rotorwelle 10 eingestellt werden.

### Bezugszeichenliste

| | | |
|---|---|---|
| 2 | - | Antriebseinrichtung |
| 4 | - | Außenteil |
| 6 | - | Innenteil |
| 8 | - | Spaltrohr |
| 10 | - | Rotorwelle |
| 12 | - | Laufrad |
| 14 | - | Pumpenteil |
| 16 | - | Lagerbaugruppe |
| 18 | - | Boden des Spaltrohres |
| 20 | - | Logergehöuse |
| 22 | - | Nuten mit darin angeordneten O-Ringen |
| 24 | - | Pumpengehäuse |
| 26 | - | Lagerring |
| 28 | - | Klemmring |
| 30 | - | Radiallagerfläche |
| 32 | - | Radiallagerelement |
| 34 | - | Nuten |
| 36, 38 | - | Stirnfläche |
| 40 | - | Drucklagerelement |
| 42 | - | Löcher |
| 44 | - | Lagerträger |
| 46 | - | Ausnehmung |
| 48 | - | Lagerklötze |
| 50 | - | Lagerelement |
| 52 | - | Lagerträger |
| 54 | - | Sicherungsring |
| 56 | - | Distanzhülse |
| 58 | - | Stirnseite |
| 60 | - | Distanzring |
| 62, 64 | - | Distanzhülsen |
| 66 | - | Federring |
| 68 | - | Mutter |
| 70 | - | Löcher |
| 72 | - | Pumpenauslass |
| 74 | - | Vorsprung |
| 76 | - | Distanzelemente |
| X | - | Längsachse |

## Patentansprüche

1. Pumpenaggregat mit einer drehbaren Rotorwelle (10), welche zumindest ein Axiallager (36, 40) und ein Radiallager (30, 32) aufweist,
das Axiallager (35, 40) und das Radiallager (30, 32) in eine gemeinsame Lagerbaugruppe (16) integriert sind, wobei die Lagerbaugruppe (16) einen Lagerring (26) aufweist, dessen Innenumfangsfläche oder dessen Außenumfangsfläche eine Radiallagerfläche (30) bildet und dessen beiden axialseitigen Stirnflächen (36, 38) Axiallagerflächen bilden und
die Lagerbaugruppe (16) in axialer Richtung (X) von den Axialenden der Rotorwelle (10) beabstandet angeordnet ist, **dadurch gekennzeichnet, dass** das einer Antriebseinrichtung (2) zugewandtes Axialende der Rotorwelle (10) frei von Lagerungen ist.

2. Pumpenaggregat nach Anspruch 1, **dadurch gekennzeichnet, dass** der Lagerring (26) in einem Lagergehäuse (20) angeordnet ist.

3. Pumpenaggregat nach einem der vorangehenden Ansprüche, **dadurch gekennzeichnet, dass** die Lagerbaugruppe (16) in axialer Richtung zwischen zumindest einem Laufrad (12) und einer Antriebseinrichtung (2) des Pumpenaggregates angeordnet ist.

4. Pumpenaggregat nach einem der vorangehenden Ansprüche, **dadurch gekennzeichnet, dass** der Lagerring (26) fest angeordnet ist und der Innenumfang des Lagerringes (26) die Radiallagerfläche (30) bildet.

5. Pumpenaggregat nach Anspruch 4, **dadurch gekennzeichnet, dass** an der Rotorwelle (10) drehfest ein Radiallagerelement (32) angeordnet ist, welches gleitend mit der Radiallagerfläche (30) des Lagerrings (26) in Kontakt ist.

6. Pumpenaggregat nach Anspruch 4 oder 5, **dadurch gekennzeichnet, dass** an der Rotorwelle (10) ein Drucklagerelement (40) angeordnet ist, welches mit einer der Axiallagerflächen (36) des Lagerringes (26) in gleitendem Kontakt ist.

7. Pumpenaggregat nach Anspruch 6, **dadurch gekennzeichnet, dass** das Drucklagerelement (40) einen ringförmigen Lagerträger (44) aufweist, welcher mit der Rotorwelle (10) verbunden ist und in welchem über den Umfang verteilt mehrere Lagerklötze (48) abgeordnet sind, welche mit der Axiallagerfläche (36) des Lagerringes (26) in Kontakt sind.

8. Pumpenaggregat nach einem der vorangehenden Ansprüche, **dadurch gekennzeichnet, dass** an der Rotorwelle (10) ein Notlagerelement (50) angeordnet ist, welches eine Lagerfläche aufweist, welche einer der Axiallagerflächen (38) des Lagerringes (26) zugewandt ist.

9. Pumpenaggregat nach Anspruch 6 und 8, **dadurch gekennzeichnet, dass** die eine Lagerfläche des Drucklagerelementes (40) und die Lagerfläche des Notlagerelementes (50) einander zu- oder abgewandt sind.

10. Pumpenaggregat nach Anspruch 8 oder 9, **dadurch gekennzeichnet, dass** das Notlagerelement (50) ringförmig ausgebildet ist und der Innenumfang oder der Außenumfang des Notlagerelements (50) ein Radiallager für die Rotorwelle (10) bildet.

11. Pumpenaggregat nach Anspruch 10, **dadurch gekennzeichnet, dass** das Notlagerelement (50) einen größeren Wärmeausdehnungskoeffizienten aufweist als das Radiallager (30, 32).

12. Pumpenaggregat nach einem der vorangehenden Ansprüche, **dadurch gekennzeichnet, dass** der Lagerring (26) in einem Lagergehäuse (20) mittels eines Klemmringes (28) fixiert ist.

13. Pumpenaggregat nach einem der Ansprüche 2 bis 12, **dadurch gekennzeichnet, dass** das Lagergehäuse (20) in dem Pumpenaggregat (24) in axialer Richtung (X) positionierbar ist.

14. Pumpenaggregat nach einem der Ansprüche 2 bis 13, **dadurch gekennzeichnet, dass** in dem Lagergehäuse (26) axiale Durchgänge (70) für das von dem Pumpenaggregat zu fördernde Fluid ausgebildet sind.

## Claims

1. A pump assembly with a rotatable rotor shaft (10), which comprises at least one thrust bearing (36, 40) and one radial bearing (30, 32),
the thrust bearing (36, 40) and the radial bearing (30, 32) are integrated into a common bearing assembly (16), wherein the bearing assembly (16) comprises a bearing ring (26), whose inner peripheral surface or whose outer peripheral surface forms a radial bearing surface (30), and whose two axial-side end-faces (36, 38) form thrust bearing surfaces, and the bearing assembly (16) is arranged distanced to the axial ends of the rotor shaft (10) in the axial direction (X), **characterised in that** the axial end of the rotor shaft (10), which faces a drive device (2), is free of mountings.

2. A pump assembly according to claim 1, **characterised in that** the bearing ring (26) is arranged in a bearing housing (20).

3. A pump assembly according to one of the preceding claims, **characterised in that** the bearing assembly (16) is arranged in the axial direction between at least one impeller (12) and a drive device (2) of the pump assembly.

4. A pump assembly according to one of the preceding claims, **characterised in that** the bearing ring (26) is arranged in a fixed manner, and the inner periphery of the bearing ring (26) forms the radial bearing surface (30).

5. A pump assembly according to claim 4, **characterised in that** a radial bearing element (32) is arranged on the rotor shaft (10) in a rotational fixed manner, which is slidingly in contact with the radial bearing surface (30) of the bearing ring (26).

6. A pump assembly according to claim 4 or 5, **characterised in that** a thrust bearing element (40) is arranged on the rotor shaft (10), which is in sliding contact with one of the thrust bearing surfaces (36) of the bearing ring (26).

7. A pump assembly according to claim 6, **characterised in that** the thrust bearing element (40) comprises an annular bearing carrier (44), which is connected to the rotor shaft (10) and in which several bearing pads (48) are arranged distributed over the periphery, which are in contact with the thrust bearing surface (36) of the bearing ring (26).

8. A pump assembly according to one of the preceding claims, **characterised in that** an emergency bearing element (50) is arranged on the rotor shaft (10), which comprises a bearing surface which faces one of the thrust bearing surfaces (38) of the bearing ring (26).

9. A pump assembly according to claim 6 and 8, **characterised in that** the one bearing surface of the thrust bearing element (40), and the bearing surface of the emergency bearing element (50) face one another or are distant to one another.

10. A pump assembly according to claim 8 or 9, **characterised in that** the emergency bearing element (50) is designed in an annular manner, and the inner periphery or the outer periphery of the emergency bearing element (50) forms a radial bearing for the rotor shaft (10).

11. A pump assembly according to claim 10, **characterised in that** the emergency bearing element (50) has a greater thermal coefficient of expansion than the radial bearing (30, 32).

12. A pump assembly according to one of the preceding claims, **characterised in that** the bearing ring (26) is fixed in a bearing housing (20) by way of a clamping ring (28).

13. A pump assembly according to one of the claims 2 to 12, **characterised in that** the bearing housing (20) is positionable in the pump assembly (24) in the axial direction (X).

14. A pump assembly according to one of the claims 2 to 13, **characterised in that** axial passages (70) for the fluid to be delivered by the pump assembly are formed in the bearing housing (20).

## Revendications

1. Groupe motopompe qui présente un arbre rotor pivotant (10), comportant au moins un palier axial (36, 40) et un palier radial (30, 32), le palier axial (36, 40) et le palier radial (30, 32) étant intégrés à un bloc structurel de support commun (16), le bloc structurel de support (16) comprenant une bague de roulement (26), dont la surface périphérique intérieure ou la surface périphérique extérieure forme une surface radiale de support (30) et dont les deux faces frontales dans le plan axial (36, 38) forment des surfaces axiales de support, et
le bloc structurel de support (16) étant disposé dans le sens axial (X) à distance des extrémités axiales de l'arbre rotor (10), **caractérisé en ce qu'**une extrémité axiale de l'arbre rotor (10) orientée vers un dispositif d'entraînement (2) est dépourvue de palier.

2. Groupe motopompe selon la revendication 1, **caractérisé en ce que** la bague de roulement (26) est disposée dans un logement de palier (20).

3. Groupe motopompe selon l'une des revendications précédentes, **caractérisé en ce que** le bloc structurel de support (16) est disposé dans le sens axial entre au moins une roue mobile (12) et un dispositif d'entraînement (2) du groupe motopompe.

4. Groupe motopompe selon l'une des revendications précédentes, **caractérisé en ce que** la bague de roulement (26) est fixe et que la périphérie intérieure de la bague de roulement (26) forme la surface radiale de support (30).

5. Groupe motopompe selon la revendication 4, **caractérisé en ce qu'**un élément de palier radial (32) est fixé sans rotation à l'arbre rotor (10) et est en contact glissant avec la surface radiale de support (30) de la bague de roulement (26).

6. Groupe motopompe selon la revendication 4 ou 5, **caractérisé en ce qu'**un élément de palier de butée (40) est disposé sur l'arbre rotor (10), et est en contact glissant avec l'une des surfaces axiales de support (36) de la bague de roulement (26).

7. Groupe motopompe selon la revendication 6, **caractérisé en ce que** l'élément de palier de butée (40) comprend un support de palier annulaire (44), qui est relié à l'arbre rotor (10) et en périphérie duquel est disposée une pluralité de patins de paliers (48), qui sont en contact avec la surface axiale de support (36) de la bague de roulement (26).

8. Groupe motopompe selon l'une des revendications précédentes, **caractérisé en ce qu'**est disposé au niveau de l'arbre rotor (10) un élément de palier de secours (50) qui comporte une surface de support orientée vers l'une des surfaces axiales de support (38) de la bague de roulement (26).

9. Groupe motopompe selon la revendication 6 et 8, **caractérisé en ce que** la surface de support de l'élément de palier de butée (40) et la surface de support de l'élément de palier de secours (50) sont tournées l'une vers l'autre ou opposées l'une à l'autre.

10. Groupe motopompe selon la revendication 8 ou 9, **caractérisé en ce que** l'élément de palier de secours (50) est de conception annulaire et **en ce que** la périphérie intérieure ou la périphérie extérieure de l'élément de palier de secours (50) forme un palier radial pour l'arbre rotor (10).

11. Groupe motopompe selon la revendication 10, **caractérisé en ce que** l'élément de palier de secours (50) présente un coefficient de dilatation thermique supérieur au palier radial (30, 32).

12. Groupe motopompe selon l'une des revendications précédentes, **caractérisé en ce que** la bague de roulement (26) est fixée dans un logement de palier (20) au moyen d'une bague de serrage (28).

13. Groupe motopompe selon l'une des revendications 2 à 12, **caractérisé en ce que** le logement de palier (20) peut être positionné dans le groupe motopompe (24) dans le sens axial (X).

14. Groupe motopompe selon l'une des revendications 2 à 13, **caractérisé en ce que** des passages axiaux (70) sont conçus dans le logement de palier (20) pour le fluide à transporter par le groupe motopompe.
